Europäisches Patentamt

European Patent Office

Office européen des brevets

(19)

(11) Veröffentlichungsnummer: **0 453 619 A1**

# (12) EUROPÄISCHE PATENTANMELDUNG

(21) Anmeldenummer: 90108137.2

(22) Anmeldetag: 27.04.90

(51) Int. Cl.⁵: **E02D 31/00, B65D 90/24, B09B 1/00**

Geänderte Patentansprüche gemäss Regel 86 (2) EPÜ.

(43) Veröffentlichungstag der Anmeldung:
**30.10.91 Patentblatt 91/44**

(84) Benannte Vertragsstaaten:
**AT BE CH DE DK FR GB LI NL SE**

(71) Anmelder: **CONOCO MINERALÖL GMBH**
**Überseering 27**
**W-2000 Hamburg 60(DE)**

(72) Erfinder: **Krispin, Kurt**
**Friedrichsgaberweg 388**
**W-2000 Norderstedt(DE)**

(74) Vertreter: **Behrens, Dieter, Dr.-Ing. et al**
**Wuesthoff & Wuesthoff Patent- und**
**Rechtsanwälte Schweigerstrasse 2**
**W-8000 München 90(DE)**

(54) **Mehrschichtiger Boden für Plätze zum Ab- und Umfüllen von wassergefährdenden Stoffen.**

(57) Ein mehrschichtiger Boden für Plätze zum Ab- und Umfüllen von wassergefährdenden Stoffen, insbesondere Kohlenwasserstoffen, weist eine Bentonit enthaltende Sperrschicht (16) auf.

Die Erfindung betrifft einen mehrschichtigen Boden für Plätze zum Ab- und Umfüllen von wassergefährdenden Stoffen, wie insbesondere Kohlenwasserstoffen. Unter den hier genannten Plätzen sind insbesondere Tankstellen und alle sonstigen Flächen zu verstehen, bei denen eine Kontaminierung des Bodens mit wassergefährdenden Stoffen möglich ist, wie Kfz-Waschplätze etc.

Es herrscht ein wachsendes Bedürfnis, im Rahmen des Umweltschutzes das Eindringen von Schadstoffen in den Boden zu verhindern. Dies gilt besonders für Kohlenwasserstoffe, wie Benzin, Öl etc.

Die Erfindung setzt sich das Ziel, einen mehrschichtigen Boden für Ab- und Umfüllplätze von insbesondere Kohlenwasserstoffen bereitzustellen, der kostengünstig herstellbar ist und eine hohe Sicherheit gegen das Eindringen von wassergefährdenden Schadstoffen, insbesondere von Kohlenwasserstoffen in das Erdreich bietet. Der erfindungsgemäße Boden soll neben seiner Funktion zum Sperren des Durchtrittes von Schadstoffen auch eine gute Stabilität aufweisen.

Erfindungsgemäß wird diese Aufgabe gelöst durch eine Ton enthaltende Sperrschicht. Als Ton wird bevorzugt Bentonit verwendet, insbesondere vom Typ Montigel F.

Der Erfindung liegt also die Erkenntnis zugrunde, daß Bentonit als zumindest Teilmaterial einer Sperrschicht für die oben genannten Zwecke gut geeignet ist.

Gemäß einer bevorzugten Ausgestaltung der Erfindung weist die Sperrschicht eine Mischung aus Kies, Sand und Bentonit auf. Das Gemisch ist bevorzugt zusammengesetzt aus 40 bis 80 % Kies, 10 bis 40 % Sand und 5 bis 30 % Bentonit. Bevorzugt liegt der Anteil des Bentonites um 10 %. Als Bentonit wird bevorzugt der Typ Montigel F verwendet.

Die Sperrschicht wird gemäß einer anderen bevorzugten Weiterbildung der Erfindung beim Einbau verdichtet. Ihre Stärke liegt bevorzugt zwischen 6 und 20 cm, besonders bevorzugt bei ca. 10 cm.

Bevorzugt wird die Sperrschicht einer Verdichtung unterzogen, wobei die erzielte Dichte der Sperrschicht größer sein sollte als 2,0 t/m³, bevorzugt größer als 2,1 t/m³.

Ebenfalls wird erfindungsgemäß bevorzugt eine Bewässerung durchgeführt, um die mineralische Sperrschicht und ggf. Bentonit enthaltende Fugen in einer über der Sperrschicht angeordneten Pflasterschicht gegen das Eindringen von Schadstoffen abzudichten. Die Bewässerung der Sperrschicht kann über einen Zeitraum von mehr als einem Tag, bevorzugt mehr als zwei Tagen erfolgen, insbesondere durch Fugen in der oberhalb der Sperrschicht vorgesehenen Pflasterschicht.

Auch bezüglich der Füllung der Fugen zwischen der über der Sperrschicht angeordneten Pflasterschicht schlägt die Erfindung vor, einen Bentonit-Anteil im Fugenmaterial vorzusehen.

Gemäß einer anderen Weiterbildung der Erfindung wird an den Rändern der Sperrschicht, also insbesondere an den Übergangsstellen zu Zapfinseln, Bordsteinkanten oder anderen Körpern, ein Anstrich aus Bentonit "pur" vorgesehen ist, bevorzugt mit einem Mischverhältnis größer als 12 %. Dieser Voranstrich aus Bentonit "pur" soll möglichst die Sperrschicht unterfassen, d.h. von der Kante nach innen unter die Sperrschicht gezogen sein.

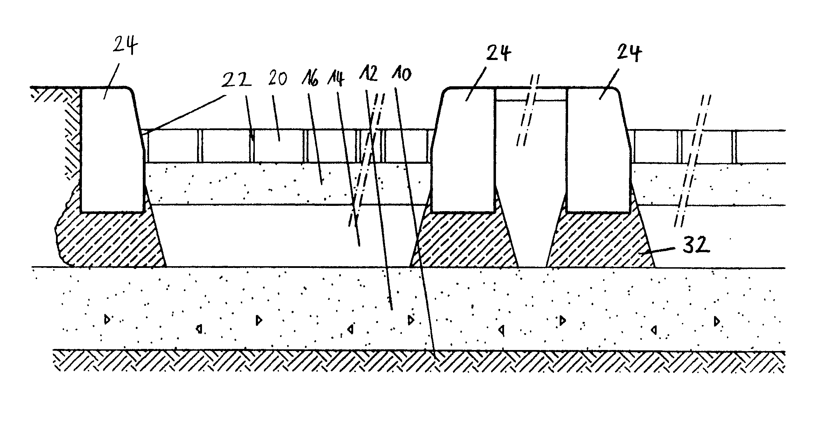

Nachfolgend wird ein Ausführungsbeispiel der Erfindung anhand der Zeichnung näher erläutert.

Die Figur zeigt schematisch einen Vertikalschnitt durch einen erfindungsgemäßen Boden für eine Tankstelle oder dergleichen.

Über dem anstehenden, frostsicheren Erdreich 10 ist eine als solche bekannte Frostschutzschicht 12 mit 20 cm Stärke nach DIN 18315 angeordnet. Über der Frostschutzschicht 12 befindet sich eine Tragschicht 14 aus einem Mineralgemisch von beim dargestellten Ausführungsbeispiel 15 cm Stärke.

Über der Tragschicht 14 befindet sich eine erfindungsgemäße Sperrschicht 16, beim dargestellten Ausführungsbeispiel aus einem Kies, Sand und Bentonit enthaltenden, verdichteten Gemisch. Das Mischverhältnis beträgt beim Ausführungsbeispiel 65 % Kies, 25 % Sand und 10 % Bentonit mit dem Handelsnamen Montigel F. Der Kies kann dabei eine Körnung von 4 bis 16 mm aufweisen und der Sand eine Körnung von 0 bis 2 mm.

Die mineralische Sperrschicht 16 wird im trockenen Zustand verdichtet. Die Trockendichte beträgt 2,0 t/m³ (bei einem Wassergehalt von 7 %). Nach dem trockenen Einbau ist es möglich, durch eine stetige, langfristige Durchfeuchtung (über mehrere Tage) ein Material mit geringem Porenraum und geringer Durchlässigkeit zu erhalten. Das Wasser im Porenraum ist am Bentonit durch dessen hohe Wasseraufnahmefähigkeit gebunden und wirkt durch Kapillarkräfte abweisend auf Kraftstoffe, da diese sich kaum im Wasser lösen.

Es werden Trockendichten von 2,1 t/m³ erreicht und die Wasserdurchlässigkeit (gemäß DIN 18130) beträgt bei vollständiger Sättigung der Probe etwa $4 \times 10^{-11}$ m/s. Die Trockendichte sollte über 1,8 t/m³ und der Wassergehalt sollte etwa zwischen 7 und 13 % liegen.

Die so gewonnene mineralische Sperrschicht 16 weist ein gutes Lastverhalten auf.

Über der Sperrschicht 16 befindet sich Verbundsteinpflaster 20 mit Fugen 22. Die Fugen 22 weisen eine Stärke von 3 mm auf und sind mit Sand/Zement 3 : 1 eingeschlämmt. Die Fugen 22 des Verbundsteinpflaster 20 bestehen aus Sand/Zement-Schlämmen mit einem Zusatz aus einem sogenannten Feingemisch aus Sand und Bentonit. Die Sand/Zement-Schlämme weisen beim Ausführungsbeispiel ein Verhältnis von Sand zu Zement gleich 3 : 1 auf. Der Zusatz des Feingemisches aus Sand und Bentonit beträgt 5 bis 20, vorzugsweise 10 %. Dabei ist die Körnung des Sandes 0 bis 2 mm und das Verhältnis Sand zu Bentonit ist bevorzugt gleich 5 : 2.

Statt der oben beschriebenen Fugen kann an den Kanten des Bodens auch eine Abdichtung mit einem Bentonit-Voranstrich erfolgen.

Der erfindungsgemäße Boden bietet Schutz gegen Schadstoffe, insbesondere Kohlenwasserstoffe, da zwischen dem hydrophoben Kohlenwasserstoff und der hydrophilen Sperrschicht keine Vernetzung auftritt. Der hohe Bentonitanteil von 10 M.-% oder mehr in der mineralischen Sperrschicht erhöht die Sorptionsfähigkeit erheblich.

## Patentansprüche

1. Mehrschichtiger Boden für Plätze zum Ab- und Umfüllen von wassergefährdenden Stoffen mit einer Ton enthaltenden Sperrschicht, dadurch **gekennzeichnet, daß**
   - die Sperrschicht (16) eine Mischung aus 40 - 80% Kies, 20 - 40% Sand und 5 - 25% Bentonit aufweist, und daß
   - die Sperrschicht verdichtet ist, insbesondere auf Verdichtungswerte von mindestens 2,0 $t/m^3$, vorzugsweise auf Verdichtungswerte von mindestens 2,1 $t/m^3$.

2. Boden nach Anspruch 1, dadurch **gekennzeichnet, daß** über der Sperrschicht (16) eine Pflasterschicht (20) angeordnet ist.

3. Boden nach Anspruch 2, dadurch **gekennzeichnet, daß** die Pflasterschicht (20) mit einer Zement/Sand-Mischung 3:1 gefüllte Fugen (22) aufweist.

4. Boden nach Anspruch 3, dadurch **gekennzeichnet,** daß der Sand/Zement-Mischung eine Feinmischung von 60 bis 80 M.-% Sand einschließlich eines Füllers, und 20 bis 40 M.-% Bentonit, vorzugsweise 30 % Bentonit, zugesetzt ist.

5. Boden nach einem der vorhergehenden Ansprüche, dadurch **gekennzeichnet, daß** an seitlichen Rändern der Sperrschicht (16), insbesondere Übergangsstellen zu Zapfinseln oder dergleichen, ein Anstrich (26) aus Bentonit vorgesehen ist.

6. Boden nach einem der vorhergehenden Ansprüche, dadurch **gekennzeichnet, daß** die Sperrschicht (16) 6 bis 20 cm stark ist.

7. Boden nach einem der vorhergehenden Ansprüche, dadurch **gekennzeichnet, daß** unter der Sperrschicht (16) eine Tragschicht (14) aus einem Mineralgemisch angeordnet ist.

8. Boden nach Anspruch 7, dadurch **gekennzeichnet, daß** unter der Tragschicht (14) eine Frostschutzschicht (12) angeordnet ist.

9. Verfahren zur Erzeugung eines Bodens für Plätze zum Ab- und Umfüllen von wassergefährdenden Stoffen mit folgenden Schritten:
   - Aufbringen einer Frostschutzschicht (12) auf das Erdreich,
   - Aufbringen einer Tragschicht (14) auf die Frostschutzschicht (12),
   - Aufbringen einer Sperrschicht (16) auf die Tragschicht (14), wobei die Sperrschicht eine trockene Mischung aus 40 - 80% Kies, 20 - 40% Sand und 5 - 25% Bentonit aufweist,
   - Verdichten der Sperrschicht (16) auf eine Trockendichte von mindestens 2,0 $t/m^3$, bevorzugt mindestens 2,1 $t/m^3$, und
   - Einschlämmen der Fugen (22) einer über der Sperrschicht (16) angeordneten Pflasterschicht (20) mit einer Sand/Zement-Mischung im Verhältnis 3:1.

EP 0 453 619 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-292941 (DYCKERHOFF & WIDMANN)<br>* Spalte 1, Zeilen 1 - 7 *<br>* Spalte 4, Zeile 47 - Spalte 5, Zeile 26 *<br>* Spalte 6, Zeile 51 - Spalte 7, Zeile 46 *<br>* Spalte 9, Zeilen 22 - 57; Figuren 1, 4 *<br>--- | 1-3, 8,<br>10, 11 | E02D31/00<br>B65D90/24<br>B09B1/00 |
| X | EP-A-82629 (AMERICAN COLLOID COMPANY)<br>* Seite 1, Zeile 15 - Seite 2, Zeile 29 *<br>* Seite 3, Zeile 30 - Seite 4, Zeile 33; Figur 3 *<br>--- | 1-3, 7 | |
| X | DE-A-2708515 (HENKEL)<br>* Seite 1, Zeilen 8 - 17 * | 1-3, 11 | |
| A | * Seite 2, Zeile 14 - Seite 3, Zeile 30 *<br>--- | 4, 5, 7 | |
| A | DE-A-3629768 (BILFINGER)<br>* Seite 2, Zeilen 26 - 28 *<br>* Seite 3, Zeilen 25 - 39 *<br>--- | 12, 13 | |
| A | PT CIVIELE TECHNIEK.<br>vol. 40, no. 4, April 1985, RIJSWIJK NL<br>Seiten 27 - 33; MISCHGOFSKY:<br>"BODEMSANERING"<br>* Seite 31, Zeilen 22 - 57; Figur 6 *<br>----- | 1 | RECHERCHIERTE SACHGEBIETE (Int. Cl.5)<br><br>B65D<br>E02D<br>E01C<br>B09B |

Der vorliegende Recherchenbericht wurde für alle Patentansprüche erstellt

| Recherchenort | Abschlußdatum der Recherche | Prüfer |
|---|---|---|
| DEN HAAG | 17 DEZEMBER 1990 | BELLINGACCI F. |